**Europäisches Patentamt**

**European Patent Office**

**Office européen des brevets**

(11) Veröffentlichungsnummer : **0 144 797**
**B1**

(12) **EUROPÄISCHE PATENTSCHRIFT**

(45) Veröffentlichungstag der Patentschrift :
28.09.88

(51) Int. Cl.⁴ : **B 60 J 3/02**

(21) Anmeldenummer : 84113519.7

(22) Anmeldetag : 09.11.84

(54) Sonnenblende für Fahrzeuge.

(30) Priorität : 17.11.83 DE 3341509

(43) Veröffentlichungstag der Anmeldung :
19.06.85 Patentblatt 85/25

(45) Bekanntmachung des Hinweises auf die Patenterteilung : 28.09.88 Patentblatt 88/39

(84) Benannte Vertragsstaaten :
DE FR GB IT SE

(56) Entgegenhaltungen :
DE-A- 2 113 919
DE-A- 2 258 005
DE-A- 2 400 784
US-A- 2 422 863
US-A- 3 375 364
US-A- 3 948 554

(73) Patentinhaber : Gebr. Happich GmbH
Postfach 10 02 49 Clausenbrücke 1
D-5600 Wuppertal 1 (DE)

(72) Erfinder : Juraschek, Peter
Am Wichelhausberg 9
D-5600 Wuppertal 2 (DE)
Erfinder : Nowak, Manfred
Steinberg 16
D-5650 Solingen 1 (DE)

Jouve, 18, rue St-Denis, 75001 Paris, France

## Beschreibung

Die Erfindung bezieht sich auf eine Sonnenblende für Fahrzeuge, im wesentlichen bestehend aus einem plattenförmigen, eine etwa rechteckige Umrißkontur aufweisenden Sonnenblendenkörper, der in einer Längsrandzone eine etwa parallel zu dieser verlaufend eingelagerte Lagerachse trägt, um die der Sonnenblendenkörper schwenkbar gelagert ist.

Fahrzeuge werden üblicherweise mit herabklappbaren Sonnenblenden ausgestattet, die am oberen Rand der Windschutzscheibe angebracht werden, um im Bedarfsfalle den oberen Teil der Scheibe abzudecken. Die im allgemeinen gepolstert ausgeführten Sonnenblenden besitzen nur eine bedingte Brauchbarkeit, da sie nur den oberen Teil der Scheibe abzudecken vermögen. Gegen die Einstrahlung der sehr tief stehenden Sonne, wie sie in den frühen Morgen- und Abendstunden und beim Bergauffahren häufig anzutreffen ist, vermögen die bekannten Sonnenblenden somit nicht hinreichend zu schützen.

In der DE-A 24 00 784 ist eine Sonnenblende beschrieben, bei der der Blendschutzbereich nach unten durch einen an dem unteren Längsrand des Sonnenblendenkörpers angelenkten Zusatzblendenkörper vergrößert werden kann. Der Zusatzblendenkörper kann aber, ganz abgesehen davon, daß er die Sonnenblende wesentlich verteuert, im heruntergeklappten Zustand eine beträchtliche Sichtbeeinträchtigung für den Fahrzeuglenker bedeuten.

Es ist weiterhin bekannt (vgl. DE-A 22 58 005 oder DE-A-21 13 919), einen Sonnenblendenkörper mit einer am unteren Rand offenen taschenartigen Ausnehmung auszubilden und in der Ausnehmung eine nach unten herausziehbare Blendschutzscheibe anzuordnen, um auf diese Weise den Blendschutzbereich des Sonnenblendenkörpers nach unten zu vergrößern. Eine solche Sonnenblende ist jedoch, wie Versuche gezeigt haben, nicht geeignet, den praktischen Bedürfnissen gerecht zu werden. Insbesondere ist es äußerst schwierig, den Sonnenblendenkörper nahezu über seine gesamte Länge und Breite zu schlitzen und in dem Schlitz die Blendschutzscheibe verkantungsfrei zu führen.

Es ist Aufgabe der Erfindung, eine Sonnenblende der eingangs genannten Art so zu verbessern, daß sie bei einfacher und kostengünstiger Herstellbarkeit und ohne Zusatzblendenkörper oder zusätzlicher Blendschutzscheibe einen zuverlässigen Blendschutz auch bei tiefstehender Sonne bietet.

Diese Aufgabe wird gemäß der Erfindung dadurch gelöst, daß der Sonnenblendenkörper aus einem die Lagerachse tragenden Oberteil und einem daran über Führungselemente senkrecht zur Lagerachse verschiebbar angeordneten Unterteil besteht.

Durch die erfindungsgemäße Maßnahme, den Sonnenblendenkörper zweiteilig auszubilden und die beiden Teile derart miteinander zu verbinden, daß sie relativ zueinander bewegbar sind, ergibt sich die vorteilhafte Möglichkeit, den Sonnenblendenkörper insgesamt in herkömmlicher Weise vor die Windschutzscheibe zu schwenken und dessen Unterteil zusätzlich so zu verlagern, daß ein optimaler Blendschutz erzielt wird. Durch die Erfindung wird aber der durch den Sonnenblendenkörper bewirkte Blendschutzbereich nicht notwendigerweise vergrößert, sondern in erster Linie im Bedarfsfalle verlagert.

In Ausgestaltung der Erfindung ist vorgesehen, daß die Führungselemente aus wenigstens einem Zapfen und wenigstens einer Zapfenaufnahme bestehen, wobei der Zapfen teleskopierbar in der Zapfenaufnahme angeordnet ist. Vorzugsweise ist der Zapfen ratschenartig verschiebbar in der Zapfenaufnahme angeordnet. Durch den Zapfen und die Zapfenaufnahme ist eine Führungseinrichtung gebildet, die einerseits einfach und kostengünstig herstellbar ist und die sich andererseits durch eine gute wartungsfreie Funktionstüchtigkeit auszeichnet. Vorzugsweise, aber nicht notwendigerweise, ist eine aus zwei Zapfen und zwei Zapfenaufnahmen gebildete Führungseinrichtung vorgesehen.

In bevorzugter Ausgestaltung der Erfindung ist weiterhin vorgesehen, daß das Oberteil wesentlich schmaler als das Unterteil ausgebildet ist und wenigstens einen daran angeordneten Zapfen trägt, welcher in eine im Unterteil eingelagerte Zapfenaufnahme eingreift. Damit fällt dem Oberteil im wesentlichen die Aufgabe zu, die Lagerachse zu lagern und das Unterteil zu tragen.

Ein vorteilhafte Weiterbildung der Erfindung kann darin bestehen, daß das Oberteil wenigstens an einer Außenseite einen sich über zumindest eine Teillänge desselben erstreckenden, parallel zum Zapfen ausgerichteten und das Unterteil an einer Außenseite überlappenden zungenartigen Ansatz aufweist, wobei die Überlappungslänge zumindest dem größtmöglichen Verschiebeweg des Unterteils relativ zum Oberteil entspricht. Damit wird der beim Abziehen des Unterteils vom Oberteil entstehende Spalt zwischen diesen Bauteilen überdeckt, so daß auch durch diesen Spalt keine möglicherweise blendenden Strahlen ins Fahrzeuginnere eintreten können. Weiterhin kann durch diese Maßnahme der wirksame Blendschutzbereich des Sonnenblendenkörpers nicht nur nach unten verlagert, sondern darüber hinaus auch vergrößert werden. Letzteres ist insbesondere für kleinwüchsige Fahrzeuglenker wichtig, weil sie den Blendschutzbereich des Sonnenblendenkörpers nunmehr auf ihre Bedürfnisse individuell einstellen können.

Weiterhin kann vorgesehen sein, daß eine Außenfläche des Unterteils wenigstens eine den Abmessungen des Ansatzes entsprechende stufenförmige Absetzung zum Niveauausgleich aufweist. Diese Maßnahme dient in erster Linie dazu, der Sonnenblende ein gefälliges Aussehen zu verleihen.

Besonders vorteilhaft ist es, im Hinblick auf eine einfache und kostengünstige Herstellbarkeit der Sonnenblende, daß in weiterer Ausgestaltung der Erfindung vorgesehen ist, daß das Oberteil aus einem Kunststoff-Spritzgußkörper besteht und daß das Unterteil als Polsterkörper mit einer darin eingelagerten Verstärkungseinlage und zumindest einer darin eingelagerten Zapfenaufnahme ausgebildet ist. Dabei ist es weiterhin vorteilhaft, daß das Oberteil mit einer Lageraufnahme für die Lagerachse, dem zungenförmigen Ansatz, dem Zapfen und ggf. einer Gegenlagerachse, einstückig und materialeinheitlich ausgebildet ist, weil sich hierdurch eine besonders kostengünstige Herstellbarkeit ergibt.

Die erfindungsgemäße Sonnenblende kann noch dadurch vervollkommnet werden, daß das Oberteil eine Aussparung mit einer darin eingesetzten, über die Fahrzeugelektrik mit Strom zu versorgenden Lichtquelle und einer diese abdeckenden Linse aufweist und daß das Unterteil einen in einer Aussparung angeordneten Spiegel trägt.

Ausführungsbeispiele der Erfindung werden nachfolgend anhand der Zeichnung näher erläutert. Es zeigen

Fig. 1 die komplette Sonnenblende in Ansicht,

Fig. 2 die Sonnenblende nach Fig. 1, bei der das Unterteil des Sonnenblendenkörpers vom Oberteil weggezogen ist,

Fig. 3 einen Schnitt A-A nach Fig. 2,

Fig. 4 die Sonnenblende mit verlagertem Unterteil in einer gegenüber Fig. 2 abgewandelten Ausführungsform,

Fig. 5 eine Stirnansicht der Sonnenblende nach Fig. 4,

Fig. 6 eine Stirnansicht der Sonnenblende nach Fig. 4, wobei das Unterteil am Oberteil anliegt,

Fig. 7 die Stirnansicht einer weiteren abgewandelten Ausführungsform eines Sonnenblendenkörpers,

Fig. 8 die Sonnenblende nach Fig. 4 in schaubildlicher und teilweise weggebrochen dargestellter Ansicht und

Fig. 9 einen Schnitt B-B nach Fig. 8.

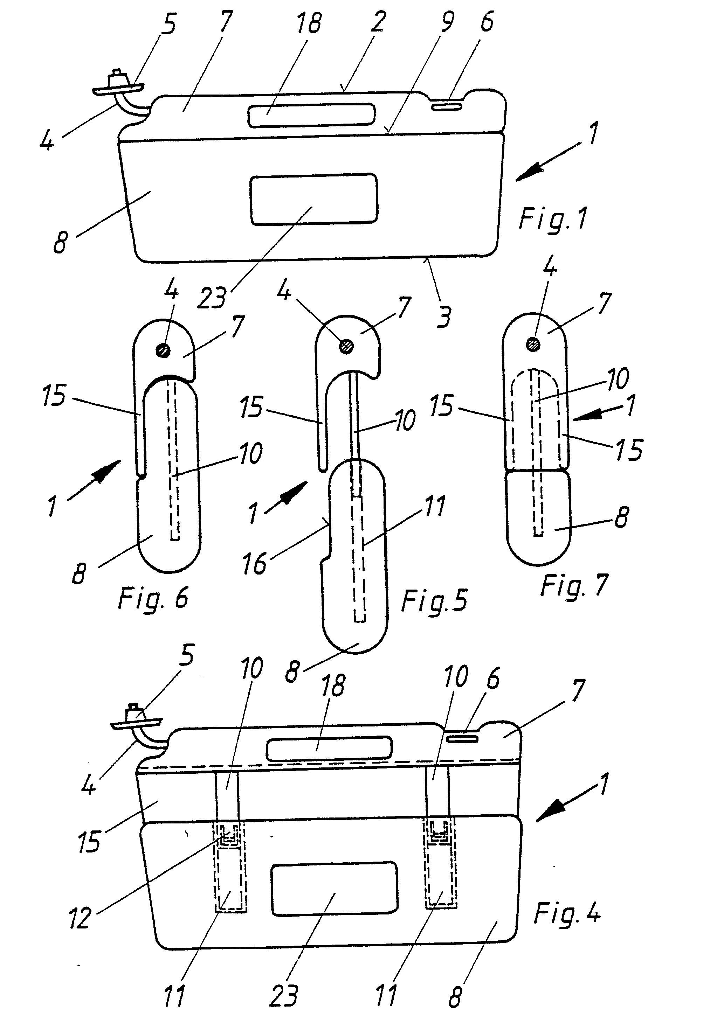

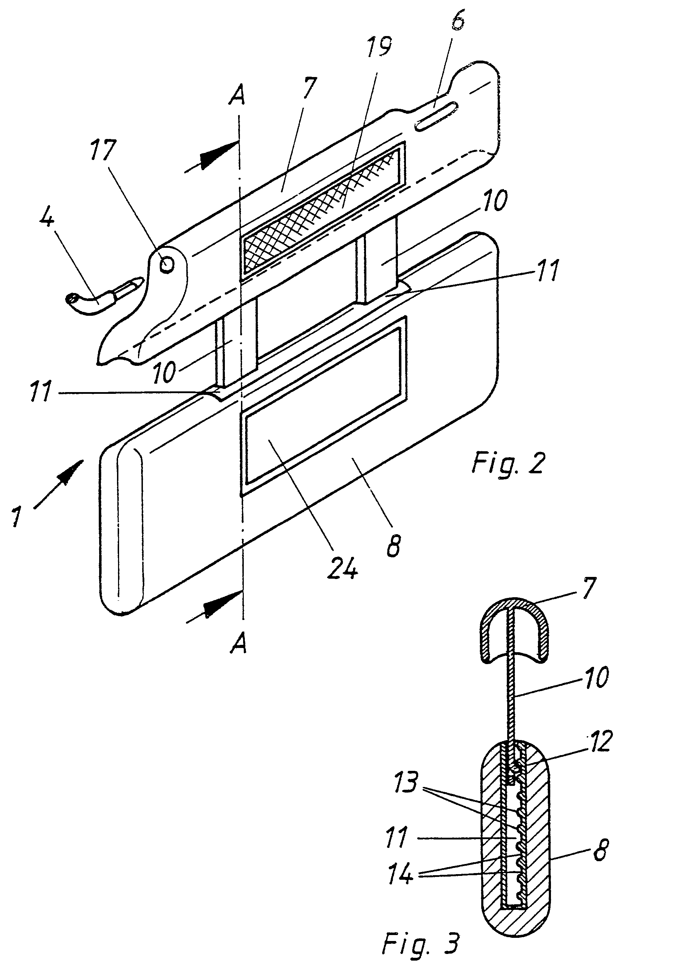

Die in Fig. 1 dargestellte Sonnenblende besteht aus einem Sonnenblendenkörper 1 mit einer oberen Längskante 2 und einer zu dieser zumindest annähernd parallel verlaufenden unteren Längskante 3. Der Sonnenblendenkörper 1 weist in der oberen Längsrandzone eine darin eingelagerte und etwa parallel zur Längskante 2 ausgerichtete Lagerachse 4 auf, deren aus dem auf der Zeichnung linken Stirnende des Sonnenblendenkörpers 1 heraustretender Endbereich abgewinkelt und in einem Lagergehäuse 5 angeordnet ist, welches seinerseits an einer Fahrzeugkarosserie befestigt wird. An dem der Lagerachse 4 abgewandten Endbereich weist der Sonnenblendenkörper 1 eine Gegenlagerachse 6 auf, die mit dem im Sonnenblendenkörper 1 befindlichen Achsteil der Lagerachse 4 fluchtet. Die Gegenlagerachse 6 ist lösbar mit einem an der Fahrzeugkarosserie zu befestigenden Gegenlagergehäuse (nicht gezeigt) verbunden. Der Sonnenblendenkörper 1 ist um die Lagerachse 4 schwenkbar, und zwar aus einer etwa parallel zum Fahrzeugdach ausgerichteten Nichtgebrauchslage in eine etwa parallel zur Windschutzscheibe ausgerichteten Gebrauchslage und kann zudem zur benachbarten Fahrzeugseitenscheibe geschwenkt werden, weil der abgewinkelte Schenkel der Lagerachse 4 drehbeweglich im Lagergehäuse 5 gelagert ist.

Der Sonnenblendenkörper 1 besteht aus zwei Hauptteilen, nämlich aus dem Oberteil 7 und dem Unterteil 8, die über noch zu beschreibende Führungselemente senkrecht zur Lagerachse 4 bzw. senkrecht zu den Längskanten 2, 3 relativ zueinander verschiebbar miteinander verbunden sind. Die Trennaht 9 zwischen Oberteil 7 und Unterteil 8 verläuft dabei parallel zu den Längskanten 2 und 3. Die zweiteilige Ausbildung des Sonnenblendenkörpers 1 ist vorgesehen, um das Unterteil 8 in der Gebrauchslage des Sonnenblendenkörpers 1 nach unten verlagern und auf diese Weise die Strahlen der tiefstehenden Sonne abschirmen zu konnen. Weil das Unterteil 8 in erster Linie dem Blendschutz dient und dem Oberteil 7 in erster linie die Trägerfunktion zukommt, ist das Unterteil 8 wesentlich breiter als das Oberteil 7 ausgeführt.

Fig. 2 und 3 zeigen nun eine erste Ausführungsform der Sonnenblende in schaubildlicher Darstellungsmanier mit dem Sonnenblendenkörper 1, der aus dem Oberteil 7, dem Unterteil 8 und zwei die Teile 7 und 8 miteinander verbindenden Zapfen 10 besteht, wobei die fest am Oberteil 7 sitzenden Zapfen 10 in jeweils einer im Unterteil 8 eingelagerten Zapfenaufnahme 11 teleskopierbar angeordnet sind. Die Zapfen 10 sind senkrecht von der oberen Längskante 2 nach unten wegstrebend am Oberteil 7 angeordnet, und zwar im Abstand voneinander. Der Abstand der Zapfen 10 zur Längsmitte des Sonnenblendenkörpers 1 kann dabei etwa ebenso groß sein wie der zu den Stirnenden des Sonnenblendenkörpers 1. Die Zapfen 10 sind hier als im Querschnitt rechteckige Säulen ausgebildet, jedoch ist es auch denkbar, eine andere, z. B. runde Querschnittsform vorzusehen.

In Fig. 3 is gezeigt, daß der Zapfen 10 eine ausgestellte Federzunge 12 an seinem Endbereich aufweist und daß die Zapfenaufnahme 11 ein Zahnstangenprofil mit Zähnen 13 und Zahnlücken 14 besitzt und daß das Zahnstangenprofil mit der Federzunge 12 ratschenartig zusammenwirkt. Damit läßt sich eine feinstufige Verstellung des Unterteils 8 relativ zum Oberteil 7 erzielen. Es liegt natürlich durchaus im Rahmen der Erfindung, zwischen den Zapfen 10 und der Zapfenaufnahme 11 z. B. eine Reibungsbremse anzuordnen und damit das Unterteil 8 stufenlos zu verstellen.

In den Fig. 4 bis 9 ist eine gegenüber der nach Fig. 2 und 3 vervollkommnete Sonnenblende dargestellt, und zwar vervollkommnet deshalb, weil hier beim Herunterziehen des Unterteils 8 kein einen Lichteinfall ermöglichender Spalt zwischen Oberteil 7 und Unterteil 8 entsteht. Um dies zu erreichen, ist am Oberteil 7 außenseitig ein sich über die Länge desselben erstreckender, parallel zu den Zapfen 10 ausgerichteter und das Unterteil 8 überlappender zungenförmiger Ansatz 15 angeordnet, dessen Länge so bemessen ist, daß auch bei heruntergezogenem Unterteil 8 kein lichtdurchlässiger Spalt entstehen kann. Die Außenfläche des Unterteils 8 weist dabei eine niveauausgleichende stufenförmige Absetzung 16 auf, die den Abmessungen des Ansatzes 15 entspricht. Beim Ausführungsbeispiel nach Fig. 7 trägt das Oberteil 7 zwei heruntergezogene zungenförmige Ansätze 15 und das Unterteil 8 weist zwei stufenförmige Absetzungen für deren Aufnahme auf.

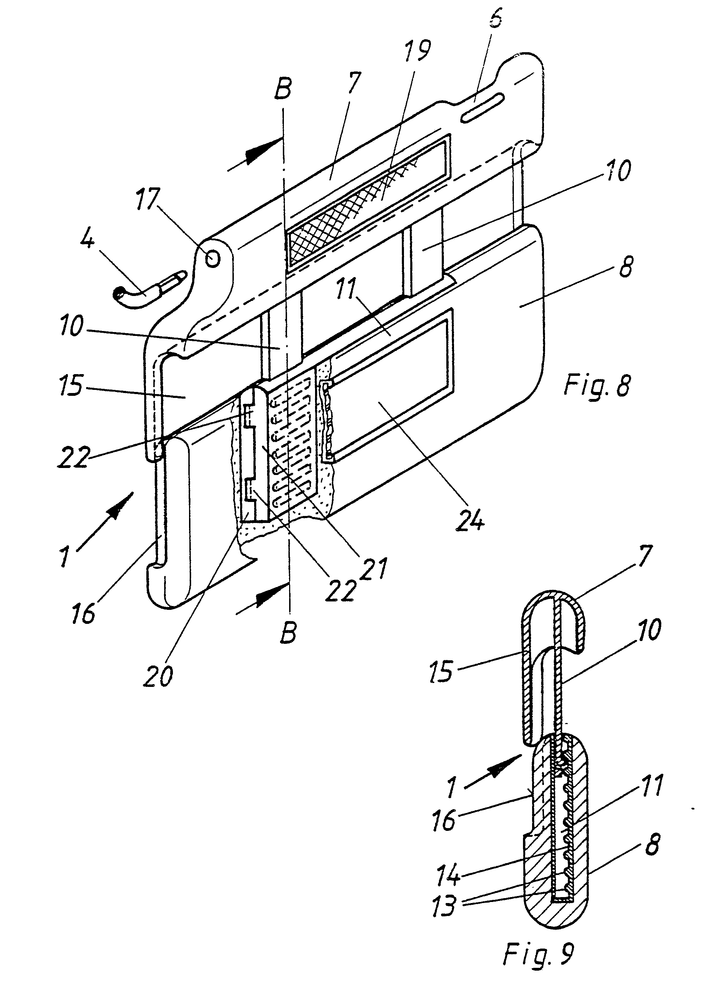

Wie insbesondere Fig. 8 erkennen läßt, sind alle Randbereiche des Sonnenblendenkörpers 1 bzw. die des Oberteils 7 und des Unterteils 8 weich abgerundet ausgebildet und genügen damit in jeder Hinsicht den Sicherheitsanforderungen.

Fig. 4 läßt erkennen, daß es sich bei den Federzungen 12 jeweils um eine dreiseitig freigeschnittene und mit dem freien Ende nach außen gebogene Lasche handelt.

Das Oberteil 7 ist als Kunststoff-Spritzgußteil ausgebildet und weist einstückig daran angeformt eine Lageraufnahme 17, die Gegenlagerachse 6, die Zapfen 10, den Ansatz 15 und vorzugsweise darüber hinaus eine Aussparung 18 zur Aufnahme einer elektrischen Lichtquelle und einer Lampenabdeckung 19 auf. Die elektrische Stromversorgung der Lichtquelle, bei der es sich um eine übliche Glühlampe oder Soffittenlampe handeln kann, kann dabei über zwei mit der Fahrzeugelektrik verbindbare und z. B. durch die Lagerachse geführte elektrische Leiter erfolgen. Die Lichtquelle und die elektrischen Leiter sind im einzelnen nicht dargestellt.

Beim Unterteil 8 handelt es sich um einen Polsterkörper, der durch eine Verstärkungseinlage ausgesteift sein kann und der die eingelagerte Zapfenaufnahme 11 aufweist. Die Zapfenaufnahme 11 besteht dabei aus einem beide Zapfen 10 führenden Bauteil, welches aus zwei als Kunststoff-Spritzgußkörper ausgebildeten Halbschalen 20, 21 zusammengesetzt und durch angeformte Klipselemente 22 zusammengehalten ist.

Das Unterteil 8 weist weiterhin eine Aussparung 23 mit einem darin eingesetzten Spiegel 24 auf, der durch die im Oberteil 7 angeordnete Lichtquelle auch bei Dunkelheit benutzt werden kann.

Es ist ohne weiteres denkbar, das Oberteil 7 mit einer Beflockung oder auch mit einer Ummantelung aus Kunststoffschaum od. dgl. auszurüsten.

Selbstverständlich ist bei der neuen Sonnenblende Vorsorge dafür getroffen, daß das Unterteil 8 nicht unbeabsichtigt gänzlich vom Oberteil 7 abgezogen werden kann. Die hierfür vorgesehenen Mittel können z. B. aus an der Halbschale angeformte, gegen die Zapfen 10 wirkende Federzungen (nicht gezeigt) bestehen, die die Federzungen 12 der Zapfen 10 an einem Zurückweichen hindern, wenn das Unterteil 8 eine bestimmte Abzugsweite erreicht hat.

**Patentansprüche**

1. Sonnenblende für Fahrzeuge, im wesentlichen bestehend aus einem plattenförmigen, eine etwa rechteckige Umrißkontur aufweisenden Sonnenblendenkörper (1), der in einer Längsrandzone eine etwa parallel zu dieser verlaufend eingelagerte Lagerachse (4) trägt, um die der Sonnenblendenkörper (1) schwenkbar gelagert ist, dadurch gekennzeichnet, daß der Sonnenblendenkörper (1) parallel zu den Längskanten und quer zur Hauptebene verlaufend geteilt ist und aus einem die Lagerachse (4) tragenden Oberteil (7) und einem daran über Führungselemente senkrecht zur Lagerachse (4) verschiebbar angeordneten Unterteil (8) besteht.

2. Sonnenblende nach Anspruch 1, dadurch gekennzeichnet, daß die Führungselemente aus wenigstens einem Zapfen (10) und wenigstens einer Zapfenaufnahme (11) bestehen, wobei der Zapfen (10) teleskopierbar in der Zapfenaufnahme (11) angeordnet ist.

3. Sonnenblende nach Anspruch 1 oder 2, dadurch gekennzeichnet, daß der Zapfen (10) ratschenartig verschiebbar in der Zapfenaufnahme (11) angeordnet ist.

4. Sonnenblende nach einem oder mehreren der Ansprüche 1 bis 3, dadurch gekennzeichnet, daß das Oberteil (7) wesentlich schmaler als das Unterteil (8) ausgebildet ist und wenigstens einen daran angeordneten Zapfen (10) trägt, welcher in eine im Unterteil (8) eingelagerte Zapfenaufnahme (11) eingreift.

5. Sonnenblende nach einem oder mehreren der Ansprüche 1 bis 4, dadurch gekennzeichnet, daß das Oberteil (7) wenigstens an einer Außenseite einen sich über zumindest eine Teillänge desselben erstreckenden, parallel zum Zapfen (10) ausgerichteten und das Unterteil (8) an einer Außenseite überlappenden zungenartigen Ansatz (15) aufweist, wobei die Überlappungslänge zumindest dem größtmöglichen Verschiebeweg des Unterteils (8) relativ zum Oberteil (7) entspricht.

6. Sonnenblende nach Anspruch 5, dadurch gekennzeichnet, daß eine Außenfläche des Unterteils (8) wenigstens eine den Abmessungen des Ansatzes (15) entsprechende stufenförmige Absetzung (16) zum Niveauausgleich aufweist.

7. Sonnenblende nach einem oder mehreren der Ansprüche 1 bis 6, dadurch gekennzeichnet, daß das Oberteil (7) aus einem Kunststoff-Spritzgußkörper besteht und daß das Unterteil (8) als Polsterkörper mit einer darin eingelagerten Verstärkungseinlage und zumindest einer darin eingelagerten Zapfenaufnahme (11) ausgebildet ist.

8. Sonnenblende nach einem oder mehreren der Ansprüche 1 bis 7, dadurch gekennzeichnet, daß das Oberteil (7) mit einer Lageraufnahme (17) für die Lagerachse (4), dem zungenförmigen Ansatz (15), dem Zapfen (10) und ggf. einer Gegenlagerachse (6) einstückig und materialeinheitlich ausgebildet ist.

9. Sonnenblende nach einem oder mehreren der Ansprüche 1 bis 8, dadurch gekennzeichnet, daß das Oberteil (7) eine Aussparung (18) mit einer darin eingesetzten, über die Fahrzeugelektrik mit Strom zu versorgenden Lichtquelle und einer diese abdeckenden Linse (19) aufweist und daß das Unterteil (8) einen in einer Aussparung (23) angeordneten Spiegel (24) trägt.

## Claims

1. A sun visor for vehicles, substantially comprising a plate-shaped body (1) having a substantially rectangular contour and comprising a bearing pin (4) embedded in and approximately parallel to a longitudinal edge zone, around which the sun visor body (1) is pivotably mounted, characterised in that the sun visor body (1) is divided parallel to its longitudinal edges and transversely to its main plane and comprises a top part (7) holding the pin (4) and a bottom part (8) movably secured thereto by guide elements perpendicular to the bearing pin (4).

2. A visor according to claim 1, characterised in that the guide elements comprise at least one spigot (10) and at least one spigot socket (11), the spigot (10) being telescopically disposed in the socket (11).

3. A visor according to claim 1 or 2, characterised in that the spigot (10) is movably disposed like a ratchet in the socket (11).

4. A visor according to one or more of claims 1 to 3, characterised in that the top part (7) is made much narrower than the bottom part (8) and bears at least one pin (10) which engages in a socket (11) in the bottom part (8).

5. A visor according to one or more of claims 1 to 4, characterised in that the top part (7) has a tongue-like projection (15) extending along at least part of the length of an outer side, aligned parallel to the spigot (10) and overlapping the bottom part (8) at an outer side, the length of overlapping being at least equal to the maximum travel of the top part (8) relative to the bottom part (7).

6. A visor according to claim 5, characterised in that an outer surface of the bottom part (8) has at least one stepped recess (16) corresponding to the dimensions of the projection (15) and for compensating the level.

7. A visor according to one or more of claims 1 to 6, characterised in that the top part (7) comprises a plastics injection-moulded member and the bottom part (8) is constructed as a padded member containing an embedded reinforcing insert in which at least one spigot socket (11) is embedded.

8. A visor according to one or more of claims 1 to 7, characterised in that the top part (7) is integral with and made of the made of the same material as a socket (17) for the bearing pin (4), the tongue-like projection (15), the spigot (10) and, if required, an abutment pin (6).

9. A visor according to one or more of claims 1 to 8, characterised in that the top part (7) bears a recess (18) containing a light source supplied with electricity by the vehicle electric system and a lens (19) covering the light source and the bottom part (8) bears a mirror (24) disposed in a recess (23).

## Revendications

1. Pare-soleil pour véhicules, constitué essentiellement par un corps de pare-soleil en forme de plaque (1) ayant un contour sensiblement rectangulaire, qui porte dans une zone de bord longitudinal un axe de pivotement (4) monté sensiblement parallèle à cette zone, autour duquel est monté à pivotement le corps de pare-soleil (1), caractérisé en ce que le corps de pare-soleil (1) est divisé parallèlement aux arêtes longitudinales et transversalement au plan principal et est constitué par une partie supérieure (7) portant l'axe de pivotement (4) et par une partie inférieure (8) disposée à déplacement sur celle-ci perpendiculairement à l'axe de pivotement (4) par l'intermédiaire d'éléments de guidage.

2. Pare-soleil selon la revendication 1, caractérisé en ce que les éléments de guidage sont constitués par au moins une barrette (10) et au moins un logement de barrette (11), la barrette (10) étant placée télescopiquement dans le logement de barrette (11).

3. Pare-soleil selon la revendication 1 ou 2, caractérisé en ce que la barrette (10) est disposée de façon à pouvoir se déplacer à la façon d'un rochet dans le logement de barrette (11).

4. Pare-soleil selon l'une ou plusieurs des revendications 1 à 3, caractérisé en ce que la partie supérieure (7) est sensiblement plus étroite que la partie inférieure (8) et porte au moins une barrette (10) disposée à l'intérieur, laquelle pénètre dans un logement de barrette (11) placé dans la partie inférieure (8).

5. Pare-soleil selon l'une ou plusieurs des revendications 1 à 4, caractérisé en ce que la partie supérieure (7) comporte au moins sur un côté extérieur un prolongement (15) en forme de languette s'étendant sur au moins une partie de la longueur de la barrette, orienté parallèlement à celle-ci et chevauchant la partie inférieure (8) sur un côté extérieur, la longueur du chevauchement correspondant au moins au déplacement maximal de la partie inférieure (8) par rapport à la partie supérieure (7).

6. Pare-soleil selon la revendication 5, caractérisé en ce qu'une surface extérieure de la partie inférieure (8) comporte au moins un décrochement (16) en forme de gradin correspondant aux dimensions du prolongement (15).

7. Pare-soleil selon l'une ou plusieurs des revendications 1 à 6, caractérisé en ce que la partie supérieure (7) est constituée par un corps en matière plastique moulé par injection, et en ce que la partie inférieure (8) est réalisée sous forme de corps rembourré dans lequel est insérée une garniture de renforcement, et dans lequel est disposé un logement de barrette (11).

8. Pare-soleil selon l'une ou plusieurs des revendications 1 à 7, caractérisé en ce que la partie supérieure (7) est réalisée d'une seule pièce et dans le même matériau, avec un logement de tourillonnement (17) pour l'axe de pivotement (4), le prolongement en forme de languette (15), la barrette (10) et éventuellement un axe de contre-palier (6).

9. Pare-soleil selon l'une ou plusieurs des revendications 1 à 8, caractérisé en ce que la partie supérieure (7) comporte une cavité (18) dans laquelle sont logées une source lumineuse alimentée en courant par l'installation électrique du véhicule, et une lentille (19) recouvrant celle-ci ; et en ce que la partie inférieure (8) porte un miroir (24) disposé dans une cavité (23).

Fig. 1

Fig. 6

Fig. 5

Fig. 7

Fig. 4

Fig. 2

Fig. 3

Fig. 8

Fig. 9